# EUROPEAN PATENT SPECIFICATION

(11) **EP 2 038 100 B1**
(45) Date of publication and mention of the grant of the patent: **29.09.2010**
(21) Application number: 07787084.8
(22) Date of filing: 05.07.2007
(51) Int. Cl.: B29C 33/50, B29C 70/44, B29D 24/00, B64C 1/00

(54) **METHOD AND MOULDING CORE FOR PRODUCING A FIBRE COMPOSITE COMPONENT FOR AVIATION AND SPACEFLIGHT**
VERFAHREN UND FORMKERN ZUR HERSTELLUNG EINER FASERVERBUNDKOMPONENTE FÜR LUFT- UND RAUMFAHRT
PROCÉDÉ ET NOYAU DE MOULAGE POUR FABRIQUER UN COMPOSANT DE COMPOSITE FIBREUX POUR L'AVIATION ET LA NAVIGATION SPATIALE

(30) Priority: 06.07.2006 DE 102006031334; 06.07.2006 US 818932 P
(43) Date of publication of application: 25.03.2009
(73) Proprietor: Airbus Deutschland GmbH, 21129 Hamburg (DE)
(72) Inventor: JACOB, Torben, 21643 Beckdorf (DE); PIEPENBROCK, Joachim, 21614 Buxtehude (DE)
(74) Representative: Peckmann, Ralf
(86) International application number: PCT/EP2007/056788
(87) International publication number: WO 2008/003733

(56) References cited:
- WO-A-2005/105402
- GB-A- 1 522 432
- US-A- 3 629 030

## Description

The present invention relates to a method for producing a fibre composite component according to claim 1, in particular for aerospace, and to a moulding core for producing such a fibre composite component according to claim 9.

Although it can be applied to any desired fibre composite components, the present invention and the problem on which it is based will be explained in more detail in the following text with reference to flat, stringer-reinforced carbon fibre plastic (CFP) components, for example skin shells for an aircraft.

It is generally known that CFP skin shells can be reinforced with CFP stringers in order to withstand high loads in aircraft, with as little additional weight as possible. In this case, a distinction is essentially drawn between two types of stringers: T stringers and Ω stringers.

T stringers have a cross section composed of a base and a stem. The base forms the connection surface to the skin shell. The use of skin shells reinforced by T stringers is widespread in aircraft construction.

Ω stringers have an approximately top-hat-shaped profile, whose ends are connected to the skin shell. Ω stringers can either be adhesively bonded to the likewise cured shell when in the cured state themselves, or they can be cured at the same time as the shell using a wet-in-wet process. The latter is desirable because this is better from the process engineering point of view. However, supporting cores or moulding cores are required for wet-in-wet production of skin shells reinforced with Ω stringers, in order to fix and support the dimensionally unstable fibre semi-finished products in the desired Ω shape during the production process. Skin shells with Ω stringers have the advantage over T stringers that the infiltration capability during an infusion process for introduction of a matrix, for example of an epoxy resin, into the fibre semi-finished products is better. Infusion processes may be more cost-effective than other known methods for producing fibre composite components, such as the prepreg process, because this allows the use of lower-cost fibre semi-finished products.

However, one problem that arises in the production of Ω stringers is that the material used at present for the supporting core or moulding core is costly and can be removed only with difficulty after the formation of the Ω stringers, so that the material which remains in the stringers disadvantageously contributes to the total weight of the aircraft.

Document US 3,629,030 refers to a method of forming a plastic duct, e.g. a hollow object, of irregular configuration employing an elastic mandrel. The elastic mandrel provides an interior or male mold for shaping the interior surfaces of the hollow object. Sheets of fiber glass impregnated with a suitable resin are wrapped around the mandrel and hardened or cured by known methods. The mandrel is expanded for fabricating the duct and contracted for separating it from the fabricated duct. The mandrel is formed by placing an inflatable tube or plurality of tubes in a mold with a quantity of uncured elastic material, inflating the tube or tubes, and curing the elastic material to form the composite inflatable mandrel. The tube or tubes have a limited expanded cross section. They also can form a honeycomb tube structure by connecting a plurality of tubes in parallel. The elastic mandrel can be used repeatedly in the manufacture of a plurality of similarly shaped ducts.

Document WO 2005/105402 A1 describes a co-cured composite stringer and associated apparatus and method. The co-cured composite stringer includes a stringer and a mandrel positioned within a channel defined in the stringer. A plurality of strips is positioned within an opening of the mandrel, and a substrate layer, such as aircraft skin, is positioned adjacent to the stringer. During application of the substrate layer to the stringer, the mandrel and plurality of strips support the stringer. After co-curing the plurality of strips can be removed from the co-cured stringer by hand and the mandrel can be subjected to a vacuum to be removed from the stringer.

Against this background, the present invention is based on the object of providing a lower-cost and lighter-weight fibre composite component, in particular for aerospace.

According to the invention, this object is achieved by a method having the features of Patent Claim 1, and/or a moulding core having the features of Patent Claim 9.

A method is accordingly provided for producing a fibre composite component, in particular for aviation and spaceflight, having the following method steps: a moulding core is formed, having a predetermined number of hollow bodies for defining an external geometry of the moulding core, with the hollow bodies being designed such that they extend in the longitudinal direction of the moulding core and can expand elastically at least in their lateral direction; at least one fibre semi-finished product (3) is placed, at least in places, on the moulding core (4) that is formed, in order to shape at least one moulding section (14) of the fibre composite component (1) to be produced; and heat and/or pressure are/is applied to the at least one moulding section (14) in order to produce the fibre composite component (1).

When the moulding core is used in an appropriate manner, these hollow bodies have an internal pressure applied to them, as a result of which they expand in the lateral direction and form the moulding core with the external geometry. For removal from the mould, the internal pressure is changed such that, for example, the cross section of the moulding core is reduced again. This advantageously allows the moulding core to be removed easily. A further advantage is that the moulding core is reusable.

Furthermore, a moulding core is provided for producing a fibre composite component, in particular a stringer on a base part, having a core material composed of plastic and having a predetermined number of hollow bodies, with the hollow bodies extending in the longitudinal direction of the moulding core and having the capability to expand elastically at least in their lateral direction.

Furthermore, a fibre composite component is provided having at least one stringer, in particular for aviation and spaceflight, which is produced by means of the moulding core according to the invention and/or the method according to the invention.

The present invention therefore has the advantage over the initially mentioned approaches that the fibre composite component can be produced by means of a low-cost moulding core. Instead of a conventional costly core material which remains in the component, it is advantageously possible to use a reusable moulding core, whose shape can be varied in a simple manner by application of an internal pressure, such that it can easily be removed from the mould. In consequence, the moulding core no longer contributes to the component weight.

Advantageous refinements, developments and improvements of the invention can be found in the dependent claims and in the description in conjunction with the drawings.

With a moulding core such as this, it is preferable for the hollow bodies to be fixed to one another, and for the moulding core formed in this way to be provided with a flexible outer layer in order to smooth the contour of the outer surfaces of the moulding core. This advantageously smooths the outer surfaces of the moulding core. The flexibility of the outer layer means that the hollow bodies can expand and contract flexibly in the lateral direction, in a simple manner.

One alternative embodiment provides for the outer layer to be applied such that it completely surrounds the hollow bodies 7, and forms their fixing to one another.

The moulding core is completely surrounded by a core sleeve which, on removal from the mould, results in advantageous separation between the moulding section and the surfaces of the moulding core. Furthermore, the core sleeve prevents the pressure medium, for example air, from being able to escape into the fibre composite component in the event of any leakage from a small tube. At the same time, this prevents damage and adverse effects to the moulding core, thus ensuring that it can be reused.

According to one preferred embodiment of the invention, reinforcing means are arranged inside or outside the core sleeve in the area of transitions, which have to be formed with sharp edges, in the external geometry of the moulding core to be formed. These reinforcing means, in particular corner profile parts, have the advantage that they form the sharp edges and corners, and the moulding core can be provided with rounded areas, which can be produced easily, in this region.

A separating layer is preferably applied to the core sleeve and prevents adhesion of the fibre semi-finished product and/or of a matrix to the core sleeve. This makes it easier to remove the core sleeve after the at least partial curing of the section of the fibre composite component created by means of the moulding core.

Fibre semi-finished products include fabric, tissue and fibre mats. These are provided with a matrix, for example an epoxy resin, and are then cured, for example in an autoclave.

According to a further preferred development of the invention, the moulding core is arranged on a base part composed of fibre composite semi-finished products, and/or is at least partially surrounded by fibre semi-finished products in order to form at least one moulding section of the fibre composite component. This advantageously allows base parts, for example skin shells, pressure cups etc., to be formed with Ω stringers. Alternatively or additionally, separate fibre composite components may also be produced, which are produced with their shape being defined entirely by the moulding core.

During the production of an Ω stringer, for example, the core sleeve is removed from the mould in the longitudinal direction of the stringer when removing it from the mould. In consequence, the core then no longer contributes to the total weight of the aircraft.

The invention will be explained in more detail in the following text with reference to the exemplary embodiment which is illustrated in the schematic figures of the drawing, in which:
- Figure 1: shows a schematic perspective view of a first exemplary embodiment of a fibre composite component during production using one method according to the invention;
- Figure 2: shows a schematic general section illustration of a moulding core for the fibre composite component shown in Figure 1;
- Figure 3: shows a schematic section illustration of a first moulding core according to the invention for the fibre composite component as shown in Figure 1;
- Figure 4: shows a schematic section illustration of a second moulding core according to the invention for the fibre composite component as shown in Figure 1;
- Figure 5: shows a schematic side view of the first or second moulding core according to the invention as shown in Figure 3 or 4; and
- Figure 6: shows a schematic perspective view of the finished fibre composite component as shown in Figure 1, after removal of the moulding cores.

Identical and functionally identical elements have been provided with the same reference symbols in all of the figures of the drawing, unless stated to the contrary.

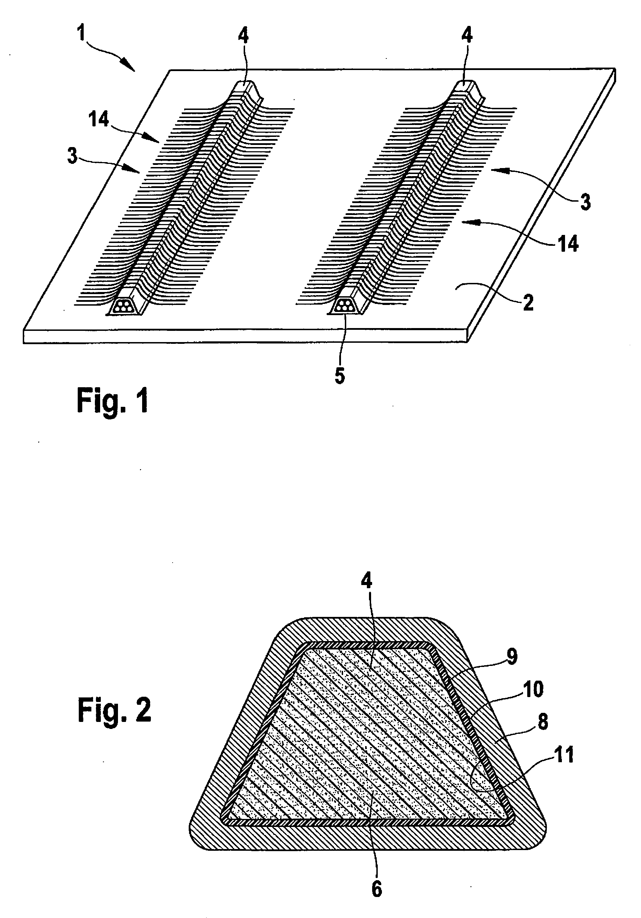

Figure 1 shows a schematic perspective view of a first exemplary embodiment of a fibre composite component 1 during production using a method according to the invention.

This example has two moulding cores 4, although the number is not restricted to this. The two moulding cores 4, whose production will be explained further below, are provided with an approximately trapezoidal cross section, with their base 5 resting on a base component 2.

Fibre semi-finished products 3 are placed down on the moulding cores 4. The fibre semi-finished products 3 in this case rest with a central section on the outer surface of the moulding cores 4, and with their ends on the base component 2, for example on an aircraft skin. Two moulding sections 14 of the fibre composite component 1 are thus formed.

Various manufacturing methods can be used to process the fibre composite material. The so-called infusion process is preferably chosen, in order to introduce a matrix, that is to say for example epoxy resin, into the fibre semi-finished products. The prepreg process may, however, be used just as well in this case.

A further step that of curing the base component 2 together with the moulding cores 4 and the fibre semi-finished product 3 in an autoclave or oven under the influence of heat and pressure, using a curing cycle which will not be explained in any more detail, thus resulting in the production of a complete fibre composite component 1.

First of all, the production of the moulding cores 4 will be described with reference to Figures 2 to 4.

Figure 2 shows a schematic, general section illustration of a moulding core 4 according to the invention for the fibre composite component 1 as shown in Figure 1, in the form of a cross section.

The moulding core 4, whose construction will be described in detail further below, has a cross section 6 which is introduced into a mould 8 and is changed in this mould to the desired shape, in this case an approximately trapezoidal shape. In this example, the moulding core 4 is surrounded by a core sleeve 9, which completely surrounds the moulding core 4 and is suitable, in terms of temperature and pressure, for its production process and its further treatment and processing. The core sleeve 9 is manufactured from a plastic, in particular a polyamide and/or a PTFE plastic. Its inside 11 rests directly on the surfaces of the moulding core 4, with its outside 10 in this example being coated with a separating (mold release) layer (not shown), which may also comprise an additional sleeve. The separating layer is used to correctly separate the moulding core 4 from the moulding section 14 during removal from the mould.

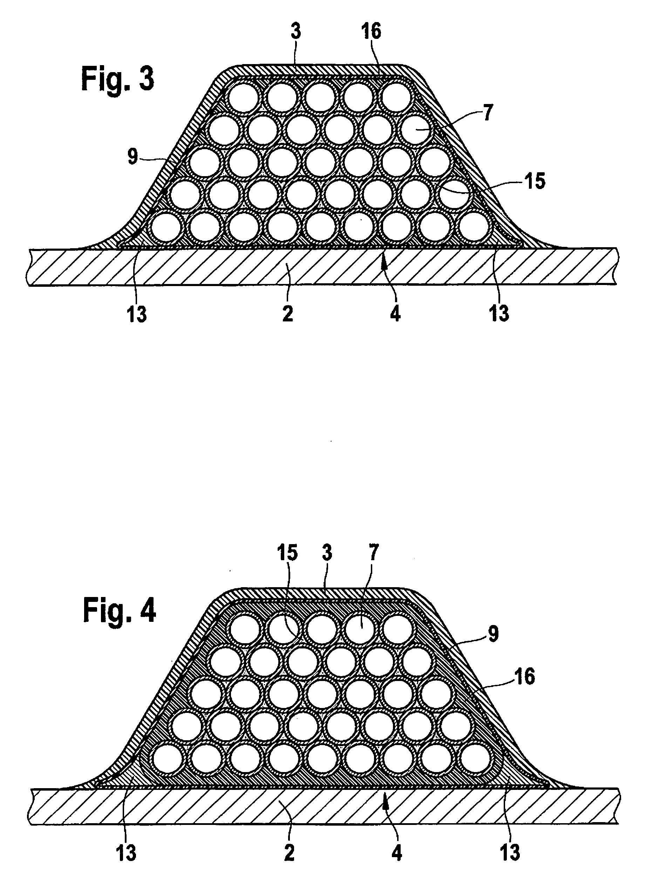

The moulding core 4 is composed of individual hollow bodies 7, as is illustrated in Figure 3. In this example, the hollow bodies 7 are individual small tubes, preferably in the form of thin films, with an approximately circular cross section, which are flexible in the lateral direction, that is to say in the radial direction. The hollow bodies 7 form an initially somewhat coarse structure for the cross section 6 of the moulding core 4. They are fixed to one another on their touching lines in the longitudinal direction, for example with the aid of suitable adhesive bonding. In this case, intermediate spaces 15 remain between them. The number of small tubes alongside one another and one above the other, as well as their diameters, may be chosen freely within certain limits, in order to achieve a desired cross section. In this example, the only feature is that the corner angle is set to 60°.

The outside of the moulding core 4 that is formed from the individual hollow bodies 7 is then provided with an outer layer 16, which contributes to smoothing its contour, and forms smooth surfaces for the moulding core 4, for example using the mould 8 (Figure 2). This outer layer 16 fills external grooves between the hollow bodies 7.

In Figure 3, reinforcing means 13 in the form of profiles, for example strips composed of metal or plastic, are used at the lower corners. The moulding core 4 can in this way be provided with particularly well-formed corner areas, by manufacturing the reinforcing means 13 in a separate mould. They may be arranged within the core sleeve 9 (not shown in Figure 3), or else outside it.

The outer layer 16 is composed of a sufficiently flexible material, for example a suitable elastic plastic, which will reliably withstand the process temperatures that occur.

The outer layer can also be applied thicker in subareas, such that an otherwise fixed corner angle of 60° can be varied with certain limits.

The outer layer 16 can also be applied such that it completely surrounds the hollow bodies 7, and forms their fixing to one another. One example of a core such as this, which at the same time has a corner angle other than 60°, is illustrated in Figure 4.

The moulding core 4 produced in this way is removed from the mould 8 and is applied to the base component 2 as described above. This state is illustrated in Figures 3 and 4. In this unpressurized state, the moulding core initially has a slightly smaller cross section. Internal pressure is then applied to the hollow bodies 7 such that the moulding core 4 assumes the desired external geometry. This will be explained in more detail further below. The moulding core 4 is then coated with the fibre semi-finished product 3 in order to form the moulding section 14, as explained above.

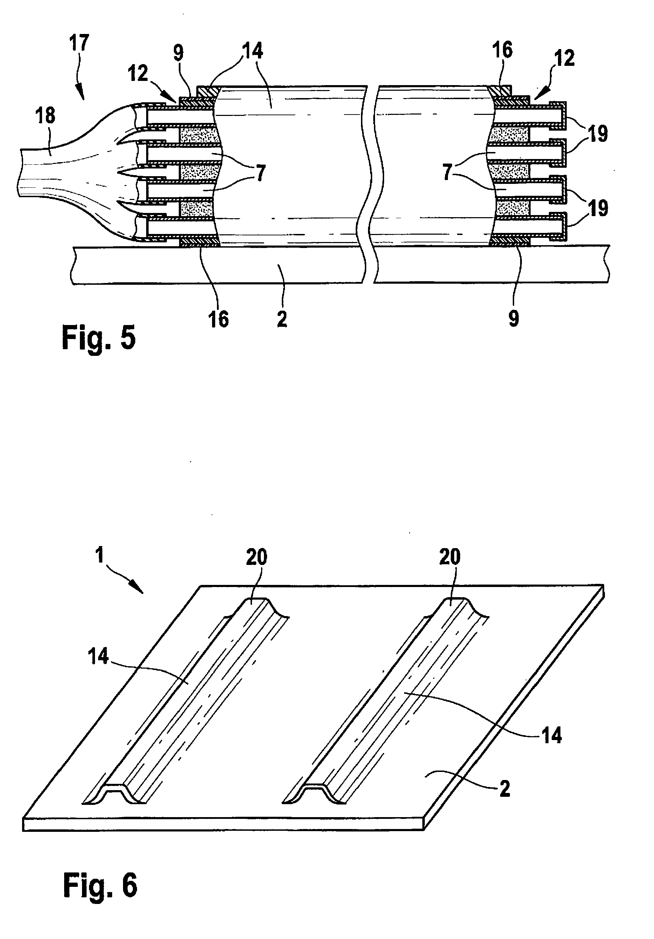

The fibre composite component 1 produced after a curing cycle, which will not be explained in any more detail, is illustrated in Figure 6 in the form of a respective view after removal of the moulding cores 4 from the mould, with moulding sections 14 in the form of stringers 20.

Figure 5 shows a side view of the moulding section 14, illustrated schematically. The moulding core 4 is arranged such that the core sleeve 9 projects at both ends, with its openings 12, out of the moulding section 14. This has the advantage that, if there are any leaks from the hollow bodies 7, the escaping air cannot enter the fibre semi-finished product 3 to be cured, but is passed to the exterior through the core sleeve 9. All of the ends of the hollow bodies 7 likewise project at both ends of the moulding section 14.

In this example, the right-hand ends of the moulding bodies 7 are closed by closures 19, and the other, opposite ends of the hollow bodies 7 are each connected to a connecting apparatus 17. This connection may be configured such that the connections are plugged onto the ends of the hollow bodies 7 or, as is shown in Figure 5, are plugged into them. In this example, the connecting apparatus 17 comprises a line 18, which has branch ends that lead to each hollow body 7 and are connected to the hollow bodies 7.

The core sleeve 9, which has a circumference that is slightly larger than the circumference of the moulding core 4, is then pushed over it.

An internal pressure is applied via the connecting apparatus 17 to the hollow bodies 7, expanding the hollow bodies 7 in their lateral direction, thus forming the desired external geometry of the moulding core 4. This is done before production of the moulding section 14, as explained above. The resultant enlargement of the circumference results in it being located tightly around the moulding core 4. The core sleeve 9 is clamped by the internal pressure applied during expansion of the moulding core 4.

The operation of this method is governed by the correct combination of a high internal pressure of, for example, 10 bar, which, however, still allows elastic, reversible, lateral expansion of the hollow bodies 7 at the curing temperature of, for example, 180°C, and a sufficiently small wall thickness for the hollow bodies 7 of, for example, 0.05 mm. Another critical factor in this case is the material, with a suitable compromise of the modulus of elasticity, low creepage tendency at the curing temperature with good resistance properties over time, and sufficiently good ductility. Possible materials in this case include, in particular, thermoplastics from the group of aromatic polysulphides and polysulphones, such as PSU, PPS or PES. These offer good long-term temperature resistance, with little creepage tendency, at temperatures such as these.

In this example, 35 hollow bodies 7 were used, each having a diameter of 5 mm. Reversible expansions of between 2 and 3% in the height and the width of the moulding core can be achieved with the data example quoted above. Each hollow body 7 has a pressure connection and a closure. Pressure connections (connecting apparatuses 17) are also possible on both sides.

Figure 6 shows a schematic perspective view of the finished fibre composite component 1 shown in Figure 1, with moulding sections 14 in the form of stringers 20, after removal of the moulding cores 4.

During removal from the mould, the hollow bodies 7 have an internal pressure applied to them via the connecting apparatus 17 such that the hollow bodies 7 return to their original extent, that is to say they contract and are detached from the wall and from the separating flexible tube. A negative pressure can also be applied, which leads to further contraction of the core, with the individual small tubes collapsing even further and, for example, collapsing such that they are flat. This makes it possible to very greatly reduce the cross section.

The moulding core 4 which has been shrunk down in this way can be removed from the cured moulding section 14, and can be reused. The core sleeve 9 can then likewise be removed, and this can particularly advantageously be done easily and also when a separating layer is present. The fibre composite component 1 can now be processed further. If reinforcing means 13 are present, these are likewise also removed, or remain in the fibre composite component 1.

A method is therefore provided for producing a fibre composite component, a corresponding moulding core and a corresponding fibre composite component, which can achieve a considerable material cost reduction in comparison to the prior art with remaining core materials. The moulding core can be removed completely, thus making it possible to reduce the weight of the fibre composite component, in comparison to the prior art.

The invention is not restricted to the specific method illustrated in the figures for producing a fibre composite component for aerospace.

For example, the idea of the present invention is also applicable to fibre composite components in the field of sporting equipment and motor sports.

Furthermore, the geometry of the moulding core, in particular the wall thickness and diameter of the small tubes as well as their arrangement, can be modified in many ways.

Furthermore, a plurality of moulding cores can also be used in order to form a moulding core which is surrounded by fibre composite mats. The aim in this case is to provide a more complex geometry by means of the multiplicity of moulding cores. This allows more complex fibre composite components to be produced.

One alternative embodiment provides for the outer layer to be applied thicker in subareas, so that it is possible to vary the otherwise fixed core angle of 60° within certain limits.

The cross sections of the hollow bodies 7 need not necessarily be circular, when in the unpressurized state. Their diameters may likewise be different, in order in this way to create different corner radii.

The internal pressure must be regulated in order to ensure reproducible cross-sectional expansion.

The wall thickness of the hollow bodies 7 may also differ.

In a preferred embodiment of the method for producing a fibre composite component 1, a matrix is introduced into the at least one fibre semi-finished product 3 with the moulding core 4, and is then at least partially cured by pressure and/or heat.

In a further embodiment of the method of claim 8, the internal pressure in the hollow bodies 7 is varied by application of atmospheric pressure or of a vacuum.

In another preferred embodiment of the method for producing a fibre composite component 1, the method is a manual-lamination, prepreg, injection-moulded and/or vacuum-infusion process.

In a preferred embodiment of the moulding core 4, the hollow bodies 7 are each composed of a thermoplastic material from the group of aromatic polysulphides and/or polysulphones.

In a further embodiment of the moulding core 4 of claim 13 or claim 14, the moulding core 4 is formed from a plastic, in particular a polyamide and/or a PTFE plastic.

In a further embodiment of the moulding core 4 of claim 15, the reinforcing means 13 are corner profile parts composed of metal and/or plastic.

In another preferred embodiment of the moulding core 4, the moulding core 4 is Ω-shaped, trapezoidal, triangular, annular and/or wavy.

In a preferred embodiment of the fibre composite component 1 with at least one stringer 20, in particular for aerospace, the stringer is produced by means of a moulding core 4 according of any one of claims 9 to 15.

In another preferred embodiment of the fibre composite component 1 with at least one stringer 20, in particular for aerospace, the stringer is produced by means of a method for producing a fibre composite component according to any one of claims 1 to 8.

### List of Reference Symbols

- 1: Fibre composite component
- 2: Base plate
- 3: Fibre semi-finished product
- 4: Moulding core
- 5: Base of the moulding core
- 6: Cross section through moulding core
- 7: Hollow body
- 8: Mould
- 9: Core sleeve
- 10: Outside of the core sleeve
- 11: Inside of the core sleeve
- 12: Opening of the core sleeve
- 13: Reinforcing means
- 14: Moulding section
- 15: Intermediate space
- 16: Outer layer
- 17: Connecting apparatus
- 18: Line
- 19: Closure
- 20: Stringer

## Claims

1. Method for producing a fibre composite component (1), in particular for aerospace, having the following method steps:
- forming a moulding core (4) that comprises a predetermined number of hollow bodies (7) for defining an external geometry of the moulding core (4), the hollow bodies (7) being designed such that they extend in the longitudinal direction of the moulding core (4) and are expandable elastically at least in their lateral direction, and are fixed to one another, the formed moulding core (4) having a flexible outer layer (16) for smoothing the contour of its outer surfaces, and a core sleeve (9) surrounding the moulding core (4), for sealing the moulding core (4) from the fibre composite component (1) to be produced;
- placing at least one fibre semi-finished product (3), at least in places, on the moulding core (4) that has been formed, in order to shape at least one moulding section (14) of the fibre composite component (1) to be produced; and
- applying heat and/or pressure to the at least one moulding section (14) in order to produce the fibre composite component (1).

2. Method according to Claim 1,
**characterized**
**in that** the hollow bodies (7) are fixed to one another on their touching lines.

3. Method according to Claim 2,
**characterized**
**in that** the ends of the hollow bodies (7) are closed on one side, and are provided on the other side with a connecting apparatus (17) for application of a pressure medium, or are provided with a connecting apparatus (17) on both sides.

4. Method according to at least one of the preceding claims,
**characterized**
**in that** the core sleeve (9) is a flexible tube.

5. Method according to at least one of the preceding claims,
**characterized**
**in that** a separating layer is applied to the core sleeve (9) of the moulding core (4), and prevents adhesion of the fibre semi-finished product (3) and/or of a matrix to the sleeve.

6. Method according to at least one of the preceding claims,
**characterized**
**in that**, where at least one fibre semi-finished product (3) is placed down at least in places, the moulding core (4) is arranged on a base component (2) composed of fibre composite semi-finished products, and/or is at least partially surrounded by fibre semi-finished products (3) in order to form the at least one moulding section (14) of the fibre composite component (1), the hollow bodies (7) of the moulding core (4) having an adjustable internal pressure applied to them via their ends.

7. Method according to Claim 6,
**characterized**
**in that** the ends of the core sleeve (9) and the ends of the hollow bodies (7) of the moulding core (4) are arranged outside the moulding section (14), when placed down at least in places.

8. Method according to at least one of the preceding claims,
**characterized**
**in that**, after application of heat and/or pressure, the internal pressure in the hollow bodies (7) is varied via their ends such that the moulding core (4) shrinks for removal from the moulding section (14).

9. Moulding core (4) for producing a fibre composite component (1), in particular a stringer (20) on a base component (2) for aerospace, having a predetermined number of hollow bodies (7), the hollow bodies (7) extending in the longitudinal direction of the moulding core (4) and being expandable elastically at least in their lateral direction, the hollow bodies (7) being fixed to one another, and the moulding core (4) comprising a flexible outer layer (16) in order to smooth the contour of its outer surfaces, and a core sleeve (9) surrounding the moulding core (4), in order to seal the moulding core (4) from the fibre composite component (1) to be produced.

10. Moulding core (4) according to Claim 9,
**characterized**
**in that** the hollow bodies (7) are fixed to one another on their touching lines.

11. Moulding core (4) according to Claim 9 or 10,
**characterized**
**in that** the outer layer (16) is widened inwards in order to smooth the contour of the outer surfaces of the moulding core (4), and also fills the intermediate spaces (15), fixing being provided for the hollow bodies (7).

12. Moulding core (4) according to at least one of Claims 9 to 11,
**characterized**
**in that** the hollow bodies (7) each have an approximately circular cross section.

13. Moulding core (4) according to at least one of Claims 9 to 12,
**characterized**
**in that** the core sleeve (9) is a flexible tube.

14. Moulding core (4) according to at least one of Claims 9 to 13,
**characterized**
**in that** the core sleeve (9) has a separating layer, which forms an outer surface of the moulding core (4).

15. Moulding core (4) according to at least one of Claims 9 to 14,
**characterized**
**in that** reinforcing means (13) are arranged in the moulding core (4), in the area of transitions, which have to be formed with sharp edges, in its external geometry.

## Patentansprüche

1. Verfahren zur Herstellung eines Faserverbundbauteils (1), insbesondere für die Luft- und Raumfahrt, mit den folgenden Verfahrensschritten:
- Ausbilden eines Formkerns (4), welcher eine vorbestimmte Anzahl von Hohlkörpern (7) zum Festlegen einer äußeren Geometrie des Formkerns (4) aufweist, wobei die Hohlkörper (7) derart ausgebildet werden, dass sie sich in der Längsrichtung des Formkerns (4) erstrecken und zumindest in ihrer Querrichtung elastisch dehnbar sind, und dass sie untereinander fixiert werden, wobei der ausgebildete Formkern (4) mit einer flexiblen Außenschicht (16) zur Konturglättung seiner Außenflächen ausgebildet und mit einer den Formkern (4) umschließenden Kernhülle (9) zur Abdichtung des Formkerns (4) gegenüber dem herzustellenden Faserverbundbauteil (1) versehen wird;
- wenigstens abschnittsweise Ablegen von wenigstens einem Faserhalbzeug (3) auf dem ausgebildeten Formkern (4) zur Formgebung von wenigstens einem Formabschnitt (14) des herzustellenden Faserverbundbauteils (1); und
- Beaufschlagen des wenigstens einen Formabschnitts (14) mit Wärme und/oder Druck zum Herstellen des Faserverbundbauteils (1).

2. Verfahren nach Anspruch 1, **dadurch gekennzeichnet, dass** die Hohlkörper (7) untereinander an ihren Berührungslinien fixiert werden.

3. Verfahren nach Anspruch 2, **dadurch gekennzeichnet, dass** die Enden der Hohlkörper (7) auf einer Seite verschlossen und auf der anderen Seite mit einer Anschlussvorrichtung (17) zur Beaufschlagung mit einem Druckmedium versehen werden oder auf beiden Seiten mit einer Anschlussvorrichtung (17) versehen werden.

4. Verfahren nach wenigstens einem der vorangehenden Ansprüche, **dadurch gekennzeichnet, dass** die Kernhülle (9) als ein flexibler Schlauch ausgebildet wird.

5. Verfahren nach wenigstens einem der vorangehenden Ansprüche, **dadurch gekennzeichnet, dass** eine Trennschicht auf die Kernhülle (9) des Formkerns (4) aufgebracht wird und dass diese ein Anhaften des Faserhalbzeugs (3) und/oder einer Matrix an der Hülle verhindert.

6. Verfahren nach wenigstens einem der vorangehenden Ansprüche, **dadurch gekennzeichnet, dass** der Formkern (4) beim wenigstens abschnittsweise Ablegen von wenigstens einem Faserhalbzeug (3) auf einem Basisbauteil (2) aus Faserverbundhalbzeugen angeordnet wird und/oder mit Faserhalbzeugen (3) zum Ausbilden des wenigstens einen Formabschnitts (14) des Faserverbundbauteils (1) wenigstens teilweise umgeben wird, wobei die Hohlkörper (7) des Formkerns (4) über ihre Enden mit einem festlegbaren Innendruck beaufschlagt werden.

7. Verfahren nach Anspruch 6, **dadurch gekennzeichnet, dass** die Enden der Kernhülle (9) und die Enden der Hohlkörper (7) des Formkerns (4) beim wenigstens abschnittsweisen Ablegen außerhalb des Formabschnitts (14) angeordnet werden.

8. Verfahren nach wenigstens einem der vorangehenden Ansprüche, **dadurch gekennzeichnet, dass** nach dem Beaufschlagen mit Wärme und/oder Druck der Innendruck in den Hohlkörpern (7) über deren Enden derart verändert wird, dass der Formkern (4) für ein Entfernen aus dem Formabschnitt (14) schrumpft.

9. Formkern (4) zur Herstellung eines Faserverbundbauteils (1), insbesondere eines Stringers (20) an einem Basisbauteil (2) für die Luft- und Raumfahrt, mit einer vorbestimmten Anzahl von Hohlkörpern (7), wobei sich die Hohlkörper (7) in der Längsrichtung des Formkerns (4) erstrecken und zumindest in ihrer Querrichtung elastisch dehnbar sind, wobei die Hohlkörper (7) untereinander fixiert sind, und wobei der Formkern (4) eine flexible Außenschicht (16) zur Konturglättung seiner Außenflächen aufweist und mit einer den Formkern (4) umschließenden Kernhülle (9) zur Abdichtung des Formkerns (4) gegenüber dem herzustellenden Faserverbundbauteil (1) versehen ist.

10. Formkern (4) nach Anspruch 9, **dadurch gekennzeichnet, dass** die Hohlkörper (7) untereinander an ihren Berührungslinien fixiert sind.

11. Formkern (4) nach Anspruch 9 oder 10, **dadurch gekennzeichnet, dass** die Außenschicht (16) zur Konturglättung der Außenflächen des Formkerns (4) nach innen erweitert ist und ferner die Zwischenräume (15) mit auffüllt, wobei eine Fixierung für die Hohlkörper (7) ausgebildet ist.

12. Formkern (4) nach wenigstens einem der Ansprüche 9 bis 11, **dadurch gekennzeichnet, dass** die Hohlkörper (7) jeweils einen in etwa kreisrunden Querschnitt aufweisen.

13. Formkern (4) nach wenigstens einem der Ansprüche 9 bis 12, **dadurch gekennzeichnet, dass** die Kernhülle (9) als ein flexibler Schlauch ausgebildet ist.

14. Formkern (4) nach wenigstens einem der Ansprüche 9 bis 13, **dadurch gekennzeichnet, dass** die Kernhülle (9) eine Trennschicht aufweist, welche eine äußere Oberfläche des Formkerns (4) bildet.

15. Formkern (4) nach wenigstens einem der Ansprüche 9 bis 14, **dadurch gekennzeichnet, dass** in dem Formkern (4) im Bereich scharfkantig auszubildender Übergänge seiner äußeren Geometrie Verstärkungsmittel (13) angeordnet sind.

## Revendications

1. Procédé de fabrication d'un composant de composite fibreux (1), en particulier pour l'industrie aérospatiale, présentant les étapes suivantes :
- formation d'un noyau de moulage (4) qui comprend un nombre prédéfini de corps creux (7) pour définir une géométrie externe du noyau de moulage (4), les corps creux (7) étant conçus de telle façon qu'ils s'étendent dans le sens longitudinal du noyau de moulage (4) et sont extensibles élastiquement au moins dans leur sens latéral, et qu'ils sont fixés les uns aux autres, le noyau de moulage formé (4) présentant une couche extérieure flexible (16) permettant de lisser le contour de ses surfaces extérieures, et un manchon de noyau (9) entourant le noyau de moulage (4) permettant d'étanchéifier le noyau de moulage (4) du composant de composite fibreux (1) à produire ;
- placement d'au moins un produit semi-fini fibreux (3), au moins par endroits, sur le noyau de moulage (4) qui a été formé, afin de modeler au moins une section de moulage (14) du composant de composite fibreux (1) à produire ; et
- application de chaleur et/ou de pression sur la au moins une section de moulage (14) afin de produire le composant de composite fibreux (1).

2. Procédé selon la revendication 1, **caractérisé en ce que** les corps creux (7) sont fixés les uns aux autres sur leurs lignes de contact.

3. Procédé selon la revendication 2, **caractérisé en ce que** les extrémités des corps creux (7) sont fermées d'un côté et sont pourvues, de l'autre côté, d'un appareil de raccordement (17) permettant l'application d'un fluide de pression, ou pourvues d'un appareil de raccordement (17) des deux côtés.

4. Procédé selon au moins une des revendications précédentes, **caractérisé en ce que** le manchon de noyau (9) est un tube flexible.

5. Procédé selon au moins une des revendications précédentes, **caractérisé en ce qu'**une couche de séparation est appliquée au manchon (9) du noyau de moulage (4) et empêche toute adhésion du produit semi-fini fibreux (3) et/ou d'une matrice au manchon.

6. Procédé selon au moins une des revendications précédentes, **caractérisé en ce que**, là où au moins un produit semi-fini fibreux (3) est mis en place au moins par endroits, le noyau de moulage (4) est disposé sur un composant de base (2) composé de produits semi-finis de composite fibreux, et/ou est au moins partiellement entouré de produits semi-finis fibreux (3) afin de former la au moins une section de moulage (14) du composant de composite fibreux (1), les corps creux (7) du noyau de moulage (4) ayant une pression interne réglable qui leur est appliquée via leurs extrémités.

7. Procédé selon la revendication 6, **caractérisé en ce que** les extrémités du manchon de noyau (9) et les extrémités des corps creux (7) du noyau de moulage (4) sont disposées à l'extérieur de la section de moulage (14), lorsqu'elles sont mises en place au moins par endroits.

8. Procédé selon au moins une des revendications précédentes, **caractérisé en ce qu'**après l'application de chaleur et/ou pression, la pression interne dans les corps creux (7) est modifiée via leurs extrémités de telle sorte que le noyau de moulage (4) se rétrécit en vue du retrait de la section de moulage (14).

9. Noyau de moulage (4) permettant la fabrication d'un composant de composite fibreux (1), en particulier d'un raidisseur (20) sur un composant de base (2) pour l'industrie aérospatiale, présentant un nombre prédéfini de corps creux (7), les corps creux (7) s'étendant dans le sens longitudinal du noyau de moulage (4) et étant extensibles élastiquement au moins dans leur sens latéral, les corps creux (7) étant fixés les uns aux autres, et le noyau de moulage formé (4) comprenant une couche extérieure flexible (16) pour lisser le contour de ses surfaces extérieures, et un manchon de noyau (9) entourant le noyau de moulage (4) pour étanchéifier le noyau de moulage (4) du composant de composite fibreux (1) à produire.

10. Noyau de moulage (4) selon la revendication 9, **caractérisé en ce que** les corps creux (7) sont fixés les uns aux autres sur leurs lignes de contact.

11. Noyau de moulage (4) selon la revendication 9 ou 10, **caractérisé en ce que** la couche extérieure (16) est élargie vers l'intérieur pour lisser le contour des surfaces extérieures du noyau de moulage (4) et remplit également les espaces intermédiaires (15), une fixation étant prévue pour les corps creux (7).

12. Noyau de moulage (4) selon au moins une des revendications 9 à 11, **caractérisé en ce que** les corps creux (7) présentent chacun une section transversale approximativement circulaire.

13. Noyau de moulage (4) selon au moins une des revendications 9 à 12, **caractérisé en ce que** le manchon de noyau (9) est un tube flexible.

14. Noyau de moulage (4) selon au moins une des revendications 9 à 13, **caractérisé en ce que** le manchon de noyau (9) présente une couche de séparation qui forme une surface extérieure du noyau de moulage (4).

15. Noyau de moulage (4) selon au moins une des revendications 9 à 14, **caractérisé en ce que** des moyens de renforcement (13) sont disposés dans le noyau de moulage (4), dans la région des transitions qui doivent être formées avec des arêtes vives, dans sa géométrie externe.
